# FASCICULE DE BREVET EUROPEEN

(11) **EP 4 241 066 B1**
(45) Date de publication et mention de la délivrance du brevet: **11.06.2025**
(21) Numéro de dépôt: 21798655.3
(22) Date de dépôt: 21.10.2021
(51) Int. Cl.: G01N 21/47, G01N 21/84, G01N 21/55

(54) **DISPOSITIF ET PROCEDE POUR DETECTER LA PRESENCE DE CRISTAUX D'HYDRATES DE GAZ**
VORRICHTUNG UND VERFAHREN ZUR DETEKTION VON GASHYDRATKRISTALLEN
DEVICE AND METHOD FOR DETECTING THE PRESENCE OF GAS HYDRATE CRYSTALS

(30) Priorité: 03.11.2020 FR 2011248
(43) Date de publication de la demande: 13.09.2023
(73) Titulaire: IFP Energies nouvelles, 92500 Rueil-Malmaison (FR)
(72) Inventeur: FROT, Didier, 92852 RUEIL-MALMAISON CEDEX (FR); GAUTREAU, Nicolas, 92852 RUEIL-MALMAISON CEDEX (FR)
(74) Mandataire: IFP Energies nouvelles
(86) Numéro de dépôt international: PCT/EP2021/079289
(87) Numéro de publication internationale: WO 2022/096285

(56) Documents cités:
- WO-A1-2016/147535
- FR-A1- 2 984 504
- US-A- 4 946 288
- US-A1- 2007 147 467
- US-A1- 2013 100 453

## Description

### DOMAINE TECHNIQUE

La présente invention concerne le domaine de la surveillance de systèmes industriels comportant des fluides essentiellement gazeux susceptibles de former des cristaux d'hydrates de gaz dans une conduite.

Plus particulièrement, la présente invention concerne le domaine de la surveillance de conduites d'extraction, de production et/ou de transport d'hydrocarbures comprenant au moins une phase gazeuse et une phase aqueuse liquide ou gazeuse, et/ou de tout autre fluide susceptible de former des cristaux d'hydrates, de clathrates ou de semi-clathrates.

Plus particulièrement, la présente invention concerne le domaine de la surveillance de conduites d'extraction, de production et/ou de transport d'hydrocarbures comprenant de l'eau et au moins une phase gazeuse susceptible de former des cristaux d'hydrates, clathrates et semi-clathrates, et éventuellement une phase liquide (aqueuse et/ou hydrocarbures), l'eau étant présente dans au-moins l'une des phases en présence.

L'invention peut en outre concerner le domaine de la surveillance des systèmes de traitement de gaz et/ou de liquéfaction de gaz, ou encore les procédés de traitement de gaz en général, ainsi que les installations de captage, de compression post captage, de stockage de gaz et de manière générale le domaine des systèmes industriels avec un ratio gaz/liquide très grand où des hydrates de gaz sont susceptibles de se former.

Les hydrates de gaz sont des cristaux composés d'un réseau de molécules d'eau stabilisé par des formateurs d'hydrates (tels que du méthane CH₄, du CO₂, de l'H₂S, du C₂H₆, du C₃H₈, ...). Les hydrates de gaz se forment dans des conditions de hautes pressions et basses températures. Si ces cristaux se forment, ils croissent, s'agglomèrent et peuvent conduire à un bouchage des conduites. La remédiation de tels bouchages est longue, difficile et coûteuse, voire dangereuse. Actuellement, les opérateurs mettent en œuvre des solutions techniques lourdes et coûteuses pour éviter la formation de ces cristaux, et qui peuvent être sur-dimensionnées par rapport au risque réel par manque de système de monitoring fiable du risque hydrate.

En particulier, un fluide susceptible de former des cristaux d'hydrates de gaz et présentant une faible teneur en eau (inférieure à environ 200 ppm) peut passer directement d'un état gazeux à la formation de cristaux d'hydrates lors d'une baisse de la température, sans passer par une phase d'eau condensée liquide. Un tel fluide requiert donc des moyens de surveillance particulièrement fiables pour anticiper le risque hydrates.

### Technique antérieure

On connaît des cellules pour étudier la capacité d'un système composé de liquide et de gaz à former des hydrates de gaz. Dans des installations laboratoire, installations pilotes et/ou industrielles, la formation des hydrates de gaz est détectée soit par une augmentation de la température car la cristallisation est exothermique, soit, lorsque le dispositif de travail est respectivement fermé ou semi-fermé (permettant le maintien de la pression) par une chute de pression ou par une brusque consommation de gaz. Il est également possible de détecter la formation d'hydrates par examen visuel. Il faut souligner que dans la plupart de ces méthodes, il est nécessaire de former (ou de dissocier) un grand nombre de cristaux d'hydrates pour obtenir un signal significatif. Dans le cas de systèmes gazeux comprenant des faibles teneurs en eau, des cellules d'équilibre avec mesures de la teneur en eau par chromatographie gazeuse ou par coulométrie sont employées.

On connait le document FR 298504 A1 qui concerne un dispositif et un procédé de détection de la présence d'hydrates de gaz, le dispositif comprenant : une fibre optique comportant un coupleur thermique à son extrémité, des moyens de sévèrisation de la température placés contre le coupleur thermique, des moyens de mesure de l'intensité du signal optique émis par la fibre optique, et des moyens de mise en contact du coupleur thermique avec un fluide gazeux susceptible de former un hydrate. Toutefois, le dispositif décrit dans ce document détecte aussi bien un dépôt sur la fibre optique sous forme solide que sous forme liquide. Autrement dit, le dispositif décrit dans ce document ne permet pas de détecter de façon certaine une phase solide, car le dépôt détecté peut être aussi bien liquide que solide.

On connait aussi les documents WO 2018/114269 A1 et WO 2018/114267 A1 qui concernent respectivement un dispositif et procédé pour une discrimination entre de la glace et des cristaux d'hydrates à partir d'une source laser, d'un moyen de mesure de la température, et d'un spectromètre Raman simplifié, plus précisément au moyen de deux filtres passe-bande pour extraire les intensités lumineuses correspondantes aux spectres Raman de deux modes, libre (eau condensée) ou lié (cristaux d'hydrates), de vibration des liaisons OH. Ce dispositif et ce procédé ne permettent pas de distinguer la présence de liquide par rapport à la présence de cristaux solides, notamment de faire une telle discrimination dans le cas de faibles teneurs en eau (<200 ppm), car le signal Raman ne présente pas d'amplitudes détectables dans ce cas. En effet, la section efficace des raies Raman étant faible, l'analyse par ce type spectroscopie nécessite un minimum de matière.

On connait aussi le document EP 3142201 A1 qui concerne l'identification de la nature chimique, phase hydrocarbure ou une phase aqueuse, d'une phase condensée au moyen d'une spectroscopie optique à faible coût. Toutefois, le dispositif décrit dans ce document ne permet pas l'identification d'hydrates de gaz.

On connait aussi le document US 4826327 A1 qui concerne l'identification de la température du point de rosée (condensation d'eau liquide), au moyen d'un dispositif comprenant des moyens pour sévériser thermiquement un miroir, et un photodétecteur. Le procédé décrit dans ce document exploite la diminution de l'amplitude de la réflexion spéculaire que produit une phase liquide condensée. Toutefois, ce document ne permet la détection de cristaux d'hydrates de gaz.

Les documents US2013/100453 A1 et WO 2016/147535 A1 décrivent la détection d'un condensat solide ou liquide d'un gaz sur une surface colorée en utilisant la réflexion diffuse en fonction de la longueur d'onde et du changement de couleur dû au dépôt.

La présente invention permet de pallier ces inconvénients. Notamment, le dispositif et le procédé selon l'invention permettent de détecter de façon fiable la présence de cristaux d'hydrates de gaz à la surface d'un corps, sans confondre ces cristaux avec une condensation liquide, et ce, même en cas de faibles teneurs en eau. En particulier, la présente invention exploite en lumière blanche, sur une surface traitée optiquement, l'effet de la diffusion multiple de la lumière pour détecter la présence de défauts cristallins sur la surface considérée.

Une variante principale du dispositif et du procédé selon l'invention permet en outre de détecter de façon fiable la présence d'une condensation liquide à la surface d'un corps.

Une deuxième variante principale du dispositif et du procédé selon l'invention permet de surveiller un système industriel susceptible de former des cristaux d'hydrates, notamment d'anticiper la formation de cristaux d'hydrates de gaz, au moyen de moyens de réglage de la température de la surface d'un corps.

### Résumé de l'invention

La présente invention concerne un dispositif tel que défini dans la revendication 1.

Selon une mise en œuvre de l'invention, ladite source lumineuse polychromatique peut être une source LED blanche.

Selon une mise en œuvre de l'invention, ladite couleur prédéfinie de ladite surface réfléchissante de ladite portion dudit corps peut être le rouge.

Selon une mise en œuvre de l'invention, lesdits moyens pour mesurer une intensité lumineuse en fonction de la longueur d'onde peuvent comprendre un spectromètre.

Selon une mise en œuvre de l'invention, lesdits moyens pour mesurer une intensité lumineuse en fonction de la longueur d'onde peuvent comprendre un photodétecteur sensible aux longueurs d'onde du domaine du visible à l'exclusion de ladite gamme de longueurs d'onde associée à ladite couleur prédéfinie de ladite surface réfléchissante de ladite portion dudit corps.

Selon l'invention, ledit dispositif est apte à détecter la présence d'une phase liquide sur ladite surface réfléchissante de ladite portion dudit corps, ledit dispositif comprenant :
- une deuxième source lumineuse monochromatique émettant dans ladite gamme de longueurs d'onde associée à ladite couleur prédéfinie de ladite surface réfléchissante de ladite portion dudit corps, et
- des deuxièmes moyens pour mesurer une intensité lumineuse en fonction de la longueur d'onde complémentaires, comprenant un photodétecteur sensible à ladite gamme de longueurs d'onde associée à ladite couleur prédéfinie de ladite surface réfléchissante de ladite portion dudit corps et disposé de manière à détecter un rayonnement résultant d'une émission par ladite source lumineuse monochromatique et s'étant réfléchi spéculairement sur ladite surface réfléchissante de ladite portion dudit corps.

Selon une mise en œuvre de l'invention, ladite source lumineuse monochromatique peut être un laser.

Selon une mise en œuvre de l'invention, ledit corps peut être un cylindre métallique dont l'une des extrémités peut être anodisée, ladite extrémité anodisée correspondant à ladite surface réfléchissante de ladite portion dudit corps ayant une couleur prédéfinie.

Selon une mise en œuvre de l'invention, ledit dispositif peut comprendre en outre des moyens de réglage de la température d'au moins ladite surface réfléchissante de ladite portion dudit corps.

L'invention concerne en outre un procédé pour détecter au moins la présence de cristaux d'hydrates de gaz formés à partir d'un fluide susceptible de former des cristaux d'hydrates de gaz, ledit procédé étant mis en œuvre au moyen du dispositif pour distinguer la présence d'une phase liquide de la présence de cristaux d'hydrates de gaz formés par ledit fluide tel que décrit ci-dessus, ledit procédé comprenant au moins les étapes suivantes :
I. on émet, au moyen de ladite première source lumineuse polychromatique, un rayonnement au moins dans le domaine spectral du visible à travers ledit fluide ;
II. on mesure au moyen desdits premiers moyens pour mesurer une intensité lumineuse en fonction de la longueur d'onde, une intensité lumineuse en fonction de la longueur d'onde d'un rayonnement réémis de manière non spéculaire par ladite surface réfléchissante de ladite portion dudit corps ayant une couleur prédéfinie lorsque ladite surface réfléchissante de ladite portion dudit corps ayant une couleur prédéfinie est éclairée par ladite première source lumineuse polychromatique ;
III. on détermine que des cristaux d'hydrates sont présents sur ladite surface réfléchissante de ladite portion dudit corps au moins si ladite intensité lumineuse en fonction de la longueur d'onde mesurée est supérieure audit premier seuil prédéfini pour au moins une longueur d'onde en dehors de ladite gamme de longueurs d'onde associée à ladite couleur prédéfinie de ladite surface réfléchissante de ladite portion dudit corps.

Selon une mise en œuvre de l'invention, ledit premier seuil prédéfini peut être au moins égal au seuil de détection desdits premiers moyens pour mesurer une intensité lumineuse en fonction de la longueur d'onde.

Selon une mise en œuvre de l'invention, on peut répéter au moins les étapes a) à c) pour une pluralité de températures décroissantes de ladite surface réfléchissante de ladite portion dudit corps, ladite température de ladite surface réfléchissante de ladite portion dudit corps étant abaissée au moyen desdits moyens de réglage de la température d'au moins ladite surface réfléchissante de ladite portion dudit corps, et on peut déterminer en outre une température de formation desdits cristaux d'hydrates de gaz.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 représente de manière schématique une réflexion spéculaire (en haut) et une réflexion diffuse (en bas) sur une surface.
La figure 2 présente des éléments du dispositif selon l'invention.
La figure 3 présente un mode de réalisation non limitatif du dispositif selon l'invention.
La figure 4 présente des courbes d'intensité lumineuse en fonction de la longueur d'onde mesurée dans le cadre d'un exemple d'application du dispositif et du procédé selon l'invention.

### Description des modes de réalisation

Selon un premier aspect, respectivement un deuxième aspect, l'invention concerne un dispositif, respectivement un procédé, pour détecter la présence de cristaux d'hydrates de gaz formés à partir d'un fluide. Selon une première variante principale, l'invention concerne un dispositif, respectivement un procédé, pour distinguer la présence d'une phase liquide de la présence de cristaux d'hydrates de gaz formés à partir d'un fluide. Le fluide selon l'invention est susceptible de former des cristaux d'hydrates de gaz. De manière générale, le fluide d'intérêt est essentiellement gazeux. Il comprend au moins un gaz (par exemple mais non limitativement de type hydrocarbure tel que du méthane) et de l'eau. L'eau peut se trouver à l'état gazeux ou liquide dans le fluide considéré, et en proportion variée par rapport au gaz ou au mélange de gaz.

Le dispositif et le procédé selon l'invention exploitent le fait que la présence de cristaux d'hydrates de gaz sur une surface, initialement parfaitement réfléchissante, va générer une réflexion diffuse, du fait de la présence de défauts cristallins, et non pas une réflexion spéculaire lorsque ces cristaux sont éclairés par une source lumineuse polychromatique émettant dans le visible. De plus, le dispositif et le procédé selon l'invention exploitent le fait que, lorsque la surface éclairée par la lumière blanche est elle-même colorée, elle renvoie un rayonnement n'émettant que dans une gamme de longueurs d'onde associée à la couleur de cette surface colorée, lorsqu'aucune phase n'est présente sur cette surface, ou alors dans le cas d'une phase transparente (gouttes d'eau par exemple). Ces propriétés permettent de détecter de façon certaine la présence d'un dépôt de cristaux d'hydrates de gaz à la surface d'un corps, sans le confondre avec une condensation liquide.

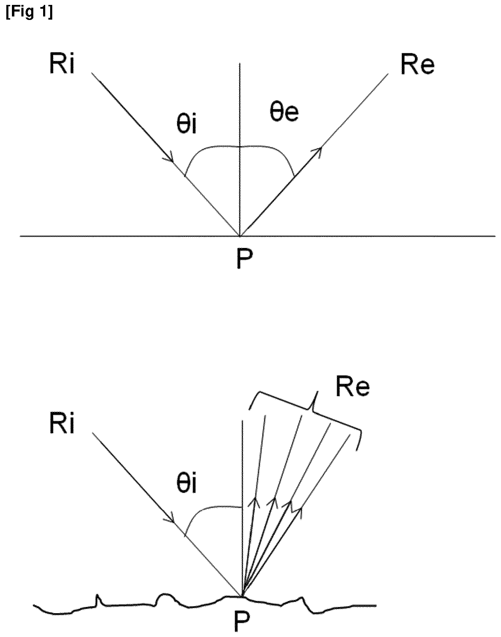

Le dispositif selon l'invention comprend au moins :
- une source lumineuse polychromatique, susceptible d'émettre un rayonnement au moins dans le domaine spectral du visible. Il est bien clair qu'une source lumineuse polychromatique peut émettre dans le domaine spectral non visible, mais le procédé selon l'invention exploite la partie visible du spectre d'une telle source polychromatique. Selon une mise en œuvre de l'invention, la source lumineuse polychromatique peut être une source de lumière blanche.
- un corps dont au moins une portion est en contact avec le fluide susceptible de former des hydrates de gaz, la portion du corps comprenant une surface réfléchissante ayant une couleur prédéfinie. Par « surface réfléchissante », on entend une surface dont les irrégularités ont des dimensions 20 fois inférieures aux longueurs d'onde du domaine spectral visible. Le corps peut être de forme quelconque, comme par exemple de forme cylindrique, parallélépipédique. Selon l'invention, une portion (c'est-à-dire une partie) de ce corps est mise en contact avec le fluide susceptible de former des hydrates de gaz, et une surface de cette portion est caractérisée par une couleur prédéfinie (par exemple, de manière non limitative, le rouge, le vert, le bleu, etc.). Il est bien clair que la couleur prédéfinie de la surface de la portion du corps est définie par une gamme de longueurs d'onde dans le domaine spectral du visible (par exemple, la gamme de longueurs d'onde associée à la couleur rouge peut être définie comme comprise entre 620 et 670 nm, pour une valeur centrale de 645 nm). Par la suite et à des fins de simplification de la lecture de la description, on parle de "surface colorée" du corps. Le fait que la surface de la portion du corps ait une couleur prédéfinie a pour effet qu'un rayonnement dans le domaine spectral du visible tombant sur cette surface colorée (en l'absence de tout dépôt à sa surface, ou alors en présence d'une phase transparente comme de l'eau liquide) va donner lieu à un rayonnement réfléchi (spéculairement) ne comprenant (principalement) que les longueurs d'ondes de la gamme de longueurs d'onde associée à la couleur de la surface colorée.
- des moyens pour mesurer une intensité lumineuse en fonction de la longueur d'onde, ces moyens étant disposés de manière à détecter un rayonnement réémis de manière non spéculaire par la surface colorée du support lorsque la surface colorée est éclairée par la source lumineuse polychromatique. Par réémission spéculaire, on entend une réflexion en un point d'une surface telle que le rayon incident donne naissance à un rayon réfléchi unique. L'angle d'émergence d'une réflexion spéculaire est donc parfaitement connu et égal (au moins en valeur absolue) à l'angle d'incidence au point de réflexion. Dans le dispositif selon l'invention, les moyens pour mesurer une intensité lumineuse en fonction de la longueur d'onde sont donc disposés de manière à ne pas être sur le trajet optique d'un rayon spéculaire, dont le rayon incident est défini par une droite passant par la source lumineuse polychromatique et la surface colorée du corps. Autrement dit, ces moyens sont disposés sur une droite passant par la surface colorée dont l'angle par rapport à la normale à la surface colorée est distinct (par exemple d'au moins 5 degrés) de l'angle formé entre la droite passant par la source lumineuse et la surface colorée et la normale à la surface colorée. Cette disposition des moyens pour mesurer une intensité lumineuse en fonction de la longueur d'onde vise à mesurer l'intensité d'une réflexion diffuse, par opposition à une intensité d'une réflexion spéculaire. La réflexion est dite diffuse lorsque la lumière est réfléchie dans un grand nombre de directions, l'énergie du rayonnement incident étant redistribuée dans une multitude de rayons réémis. Une réflexion diffuse est engendrée par une surface comportant des hétérogénéités d'indices de réfraction de dimensions comparables à la longueur d'onde employée, ce qui est le cas en présence de cristaux solides d'hydrates de gaz sur la surface colorée. Un exemple schématique de réflexion spéculaire est présentée en haut de la figure 1, où Ri est un rayon incident (en réalité un faisceau) avec un angle θi en un point de réflexion P, et donnant lieu à un rayon émergent Re avec un angle θe égal à l'angle θi. La figure 1 en bas présente le cas d'une réflexion diffuse, dans laquelle le rayon incident Ri d'angle d'incidence θi au point P, donne lieu à une pluralité de rayons émergents Re d'angles différents de l'angle d'incidence θi.
- des moyens pour détecter la présence de cristaux d'hydrates à partir de l'intensité lumineuse mesurée en fonction de la longueur d'onde et d'un seuil prédéfini. Les moyens pour détecter la présence de cristaux d'hydrates de gaz peuvent comprendre des moyens d'analyse de l'intensité lumineuse mesurée en fonction de la longueur d'onde produisant des spectrogrammes, et des moyens de traitement de ces derniers, tels qu'un ordinateur ou un smartphone (téléphone intelligent). De manière non limitative, l'analyse de l'intensité lumineuse mesurée peut être réalisée à partir d'un signal analogique ou numérique de l'intensité lumineuse mesurée en fonction de la longueur d'onde. Selon une mise en œuvre de l'invention, la détection de la présence de cristaux d'hydrates peut être réalisée au moins en comparant l'intensité lumineuse mesurée en fonction de la longueur d'onde à un seuil prédéfini. Selon une mise en œuvre de l'invention, le seuil prédéfini peut être relatif à au moins une gamme de longueurs d'onde prédéfinie dans le domaine spectral du visible, comme cela est décrit ci-après.

Selon une mise en œuvre de l'invention, la source lumineuse polychromatique susceptible d'émettre un rayonnement dans le domaine spectral du visible peut être une source halogène ou bien une source LED (Light Emissive Diode).

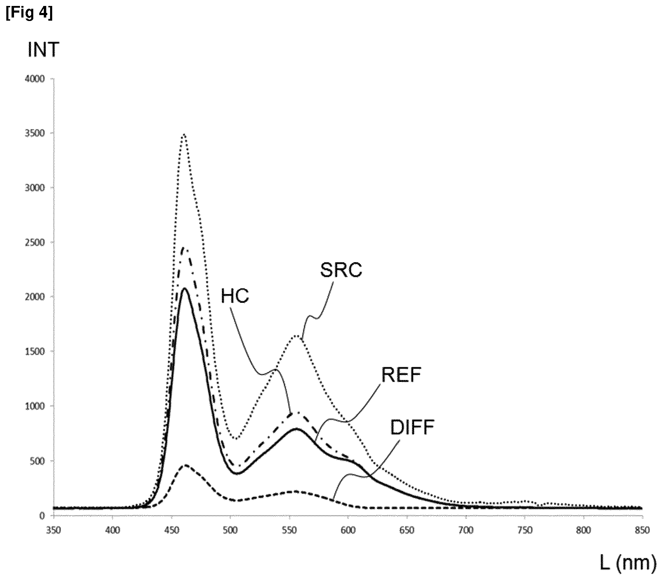

Selon une mise en œuvre de l'invention préférée, la source lumineuse polychromatique susceptible d'émettre un rayonnement dans le domaine spectral du visible peut être une source LED blanche, par exemple de 4000° K. Une telle source permet de garantir une lumière blanche, pour un coût limité et pour un rendement électro-lumineux très élevé. A titre indicatif, un exemple du spectre d'une telle source est présenté en figure 4 (courbe SRC). Comme on peut le constater sur cette figure, une LED de 4000° K produit une lumière de fluorescence qui contient beaucoup d'intensité dans le domaine complémentaire au rouge (420 - 600 nm), ce qui est un avantage notable comparé à une source halogène classique qui contient des rayonnements dans le domaine d'infrarouge inexploités dans le dispositif et/ou le procédé selon l'invention.

Selon une mise en œuvre de l'invention, le corps pour lequel au moins une portion est en contact avec le fluide d'intérêt peut être un cylindre, et la surface de cette portion ayant une couleur prédéfinie peut être au moins une des faces planes du cylindre destinée à être mise au contact du fluide d'intérêt.

De manière avantageuse, le cylindre est un cylindre métallique dont au moins la face destinée à être mise au contact du fluide d'intérêt a été anodisée, c'est-à-dire qu'on a appliqué un traitement de surface à cette face pour la teinter, par oxydation anodique. Avantageusement, la couche d'oxyde poreuse teintée dans la masse de cette face permet à cette face du cylindre d'avoir les propriétés optiques d'une couleur unique tout en conservant une grande conductivité thermique et une capacité calorifique élevée. De cette manière, le gradient thermique entre l'extrémité (où apparait la phase condensée, solide ou liquide) et le corps du cylindre est minimisée, mais cela permet aussi que l'élévation de température qui accompagne la condensation d'espèces reste négligeable. Ce choix présente l'avantage d'une grande résistance mécanique et d'une faible épaisseur (30 à 100 microns) pour la couche colorée qui constitue l'extrémité du cylindre, donc d'une faible perturbation thermique.

Selon une mise en œuvre de l'invention, la surface colorée du corps peut être de couleur rouge. Cette couleur est avantageuse car située à l'extrémité du spectre visible correspondant à la gamme des grandes longueurs d'onde dont la contribution à la diffusion Rayleigh, produite par la présence de cristaux, est faible.

De manière préférée, on peut combiner une surface colorée du corps de couleur rouge avec une source lumineuse polychromatique de type source LED blanche, par exemple de 4000°K. En effet, une source LED blanche exploite, à partir d'une LED centrée sur la gamme de longueurs d'onde 465 nm (couleur bleue), l'excitation de fluorescence d'un composé chimique pour produire une lumière blanche qui reste de fait riche en bleu. L'emploi d'une telle source est ainsi avantageuse avec une surface colorée du corps dans une gamme de longueurs d'onde différentes, en particulier le rouge. Ce choix de source lumineuse est aussi judicieux du fait que la contribution au phénomène de diffusion des courtes longueurs d'onde est bien plus élevée. Ainsi, cette combinaison de modes de réalisation du dispositif selon l'invention contribue à une détection précoce des premiers cristaux déposés sur la surface colorée du corps.

Selon une mise en œuvre de l'invention, les moyens pour mesurer une intensité lumineuse en fonction de la longueur d'onde peuvent être un spectromètre. On peut par exemple utiliser le modèle USB2000+ commercialisé par la société Ocean Insight (USA) qui combine un réseau de diffraction et un capteur CCD (pour "Charged Coupled Device" en anglais) linéaire.

De manière alternative, les moyens pour mesurer une intensité lumineuse en fonction de la longueur d'onde peuvent être formés à partir d'un photodétecteur sensible aux longueurs d'onde du domaine spectral du visible, à l'exclusion de la gamme de longueurs d'onde associée à la couleur prédéfinie de la surface colorée du corps. De cette manière les moyens pour mesurer une intensité lumineuse seront sensibles uniquement à l'intensité diffusée, produite par l'apparition des cristaux. Selon un mode de réalisation de l'invention, les moyens pour mesurer une intensité lumineuse en fonction de la longueur d'onde peuvent être formés par une photodiode et un filtre coupe-bande centré sur la gamme de longueurs d'onde associée à la couleur de la surface colorée du corps.

Selon une mise en œuvre de l'invention, les moyens pour mesurer une intensité lumineuse en fonction de la longueur d'onde peuvent être disposés de manière à ce qu'il y ait un angle d'au moins 5 degrés, de préférence au moins 10 degrés et de manière très préférée 20 degrés par rapport à un rayonnement émergent spéculaire sur la surface colorée. Un angle de 5 degrés est suffisant pour que les moyens pour mesurer une intensité lumineuse en fonction de la longueur d'onde ne reçoivent pas une intensité lumineuse provenant d'une réflexion spéculaire sur la surface colorée du corps.

Selon une mise en œuvre de l'invention, les moyens pour détecter la présence de cristaux d'hydrates à partir de l'intensité lumineuse mesurée peuvent déterminer la présence de cristaux d'hydrates de gaz en comparant l'intensité lumineuse mesurée pour au moins une gamme de longueurs d'onde à au moins un seuil prédéfini. Avantageusement, on peut conclure à la présence de cristaux d'hydrates de gaz lorsque l'intensité lumineuse mesurée pour les longueurs d'onde d'une gamme de longueurs d'onde excluant au moins la gamme de longueurs d'onde associée à la couleur de la surface colorée du corps est supérieure à un premier seuil prédéfini (par exemple au moins égal au seuil de détection de l'appareil de mesure de l'intensité lumineuse ; plus précisément, le seuil prédéfini peut être au moins égal à une augmentation d'une intensité l'intensité lumineuse de référence (mesurée préalablement lorsqu'aucun dépôt n'est formé sur la surface colorée) égale au seuil de détection de l'appareil de mesure de l'intensité lumineuse) et/ou lorsque l'intensité lumineuse mesurée pour la gamme de longueurs d'onde associée à la couleur de la surface colorée du corps est inférieure à un deuxième seuil prédéfini (par exemple égal à une baisse de 10% d'une intensité l'intensité lumineuse de référence, mesurée préalablement lorsqu'aucun dépôt n'est formé sur la surface colorée). De préférence, on peut conclure à la présence de cristaux d'hydrates de gaz lorsque la différence entre l'intensité lumineuse mesurée pour une gamme de longueurs d'onde complémentaire (par exemple la gamme de longueurs d'onde complémentaire à la gamme de longueur d'onde associée à la couleur rouge est la gamme de longueurs d'onde plus courtes associée à la couleur verte) et la gamme de longueur d'ondes associée à la couleur de la surface colorée du corps est supérieure à un premier seuil prédéfini.

Selon une autre mise en œuvre de l'invention, on peut mesurer un spectre de référence en l'absence de tout dépôt sur la surface colorée, et on soustrait ce spectre de référence au spectre mesuré. Si la somme des différences est supérieure à un seuil prédéfini (par exemple égal à 10 fois le seuil de détection des moyens pour mesurer une intensité lumineuse en fonction de la longueur d'onde utilisés), on peut conclure à la présence de cristaux d'hydrates de gaz sur la surface colorée.

Selon une mise en œuvre de l'invention, les moyens pour détecter la présence de cristaux d'hydrates à partir de l'intensité lumineuse mesurée en fonction de la longueur d'onde peuvent comprendre en outre des moyens pour alerter lorsque des cristaux d'hydrates sont en train de se former. Selon cette mise en œuvre de l'invention, cette alerte peut être déclenchée lorsque l'intensité lumineuse mesurée pour les longueurs d'onde d'une gamme de longueurs d'onde excluant au moins la gamme de longueurs d'onde associée à la couleur de la surface colorée du corps est supérieure au moins au seuil prédéfini tel que décrit ci-dessus. Selon une mise en œuvre, l'alerte peut être donnée sous la forme d'une indication visuelle ou sonore. Selon une mise en œuvre, les moyens d'alerte peuvent être positionnés à proximité immédiate du dispositif ou permettre une alerte à distance, par exemple via un message électronique envoyé sur un smartphone et/ou sur un ordinateur.

Selon l'invention, le dispositif est en outre apte à détecter la présence d'une phase liquide. Autrement dit, le dispositif selor l'invention permet ainsi de distinguer la présence d'une phase liquide de la présence de cristaux d'hydrates de gaz. Le dispositif comprend en outre une source lumineuse monochromatique dont la gamme de longueurs d'onde correspond à la couleur prédéfinie de la surface colorée du corps. De plus, les moyens pour mesurer une intensité lumineuse en fonction de la longueur d'onde comprennent en outre un photodétecteur sensible à la gamme de longueurs d'onde associée à la couleur prédéfinie de la surface colorée du corps, ce photodétecteur étant qui plus est disposé de manière à détecter un rayonnement résultant d'une émission par la source lumineuse monochromatique et étant réfléchi spéculairement par la surface colorée du corps. Autrement dit, on émet par cette source lumineuse supplémentaire monochromatique un rayonnement de la même couleur que celui de la surface colorée à éclairer, qui va renvoyer ce rayonnement, en cas de réflexion spéculaire, vers un photodétecteur apte à mesurer l'intensité lumineuse de ce rayonnement monochromatique.

Selon l'invention, les moyens pour détecter la présence de cristaux d'hydrates de gaz permettent en outre une analyse de l'intensité lumineuse mesurée par le photodétecteur. Comme décrit ci-dessus, une réflexion spéculaire ne survient pas dans le cas de la présence de cristaux d'hydrates de gaz sur la surface colorée, puisque ceux-ci engendrent un phénomène de réflexion diffuse et non de réflexion spéculaire. Dès lors que l'intensité lumineuse mesurée par le photodétecteur de l'invention baisse de manière significative, c'est-à-dire au moins de 10%, par rapport à une intensité lumineuse de référence, mesurée préalablement par le photodétecteur en l'absence de toute condensation sur la surface colorée du corps, permet de conclure à la présence d'une phase condensée (solide ou liquide) sur la surface colorée du corps. De manière préférée, l'intensité lumineuse de référence peut être mesurée préalablement à toute sévérisation thermique, de manière à prévenir l'effet d'un potentiel encrassement de la surface colorée sur la mesure de l'intensité lumineuse.

Selon une mise en œuvre de l'invention, on peut déterminer si la phase condensée (solide ou liquide) ainsi détectée sur la surface colorée est une phase liquide ou solide de la manière suivante :
- si l'intensité lumineuse en fonction de la longueur d'onde mesurée pour une gamme de longueurs d'onde associée à la couleur de la surface colorée du corps par les moyens pour mesurer une intensité lumineuse en fonction de la longueur d'onde disposés de manière à détecter un rayonnement réémis de manière non spéculaire par la surface colorée est inférieure à un seuil prédéfini tel que décrit ci-dessus, alors on peut conclure que la phase condensée (solide ou liquide) détectée sur la surface colorée est une phase liquide.
- si l'intensité lumineuse en fonction de la longueur d'onde mesurée pour une gamme de longueurs d'onde excluant au moins la gamme de longueurs d'onde associée à la couleur de la surface colorée du corps, ladite intensité lumineuse étant mesurée par les moyens pour mesurer une intensité lumineuse en fonction de la longueur d'onde disposés de manière à détecter un rayonnement réémis de manière non spéculaire par la surface colorée est supérieure à un seuil prédéfini tel que décrit ci-dessus, alors on peut conclure que la phase condensée (solide ou liquide) détectée sur la surface colorée est une phase solide et correspond à des cristaux d'hydrates de gaz.

Autrement dit, l'analyse conjointe des intensités lumineuses mesurées sur un trajet optique spéculaire et sur un trajet optique non spéculaire permet de distinguer si une phase condensée sur la surface colorée du corps est liquide ou bien correspond à des cristaux d'hydrates de gaz.

Selon une mise en œuvre de l'invention, la source lumineuse monochromatique peut être un laser, par exemple de couleur rouge lorsque la surface colorée du corps est de couleur rouge, ou bien vert lorsque la surface colorée du corps est de couleur verte. Les couleurs autres que la couleur rouge, si elles sont moins optimales pour la détection des cristaux lorsqu'une source de lumière polychromatique de type LED blanche est utilisée tel que discuté ci-dessus, peuvent être avantageusement calées sur une longueur d'onde d'une émission laser. En effet, en évitant la gamme de longueurs d'onde bleues d'une source LED blanche, on peut par exemple choisir de colorer la surface du corps en vert et employer un Laser YAG vert de longueur d'onde 532 nm.

Selon une mise en œuvre de l'invention, le photodétecteur sensible à la gamme de longueurs d'onde associée à la couleur prédéfinie de la surface colorée du corps peut comprendre une photodiode et un filtre passe-bande centré sur la gamme de longueurs d'onde associée à la couleur de la surface colorée du corps.

Selon une variante du dispositif selon l'invention, pouvant être combinée à l'invention, le dispositif peut comprendre en outre des moyens de réglage de la température d'au moins la surface colorée du corps. Les moyens de réglage de la température sont ainsi destinés à modifier la température d'au moins la surface colorée du corps, et peuvent être exploités par le procédé selon l'invention, comme cela est décrit ci-après, afin de condenser sur la surface colorée refroidie une phase plus dense, liquide ou solide. Selon cette variante de réalisation de l'invention, les moyens de réglage de la température d'au moins la surface de la portion du corps mise en contact avec le fluide d'intérêt peuvent comprendre au moins un élément à effet Peltier disposé contre un coupleur thermique lui-même en contact avec au moins la surface colorée du corps selon l'invention. L'élément à effet Peltier permet de piloter la température d'au moins la surface colorée du corps par l'ajustement en asservissement d'un courant en sens et en amplitude. Sans sortir de la présente invention, le coupleur thermique peut être encadré par deux éléments Peltier. Par la suite, on appelle "moyens de sévérisation thermique" ces moyens de réglage de la température d'au moins l'extrémité de la surface colorée du corps.

Avantageusement, le dispositif peut comprendre une fibre optique multimode et un coupleur en Y pour assurer la liaison optique de la source lumineuse polychromatique et du moyen pour la mesure de l'intensité lumineuse, même dans un environnement industriel de production de gaz (norme ATEX). Dans ce mode de réalisation, la collecte de l'intensité lumineuse diffusée par la surface colorée réfléchissante est assurée à l'extrémité de la fibre optique par un élément optique de couplage présentant un réglage de collecte avec un angle solide ajustable modulo l'ouverture numérique de la fibre multimode choisie.

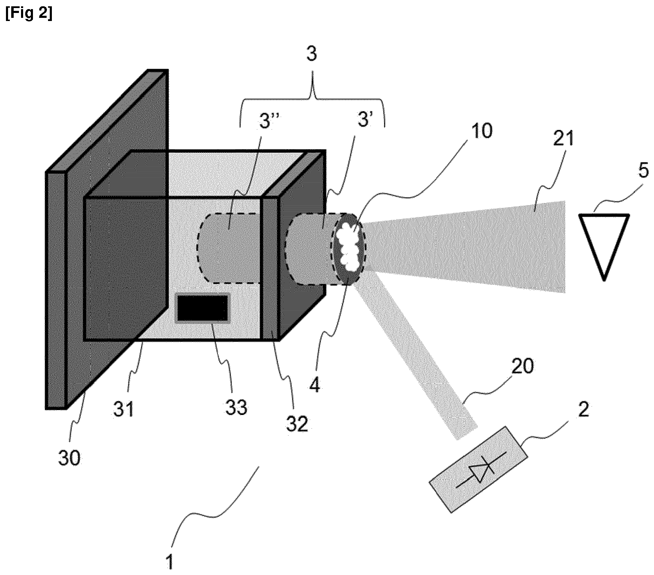

La figure 2 présente un mode de réalisation comprenant des éléments de l'invention. Plus précisément, le dispositif 1 selon ce mode de réalisation comprend une source lumineuse polychromatique 2 (par exemple une LED blanche) émettant au moins dans le domaine spectral du visible. Ce rayonnement émis 20 éclaire au moins la face colorée 4 d'une portion 3' d'un cylindre métallique 3 mise en contact avec le fluide (non représenté) susceptible de former des cristaux d'hydrates de gaz. L'autre portion 3" du cylindre métallique 3, non en contact avec le fluide, est enchâssée dans une cale froide 31 en traversant une cale adiabatique 32, la cale froide 31 étant fixée sur un support 30. La température de la cale froide est réglée aux moyens des moyens de sévèrisation thermique 33. La face plane 3' du cylindre métallique en contact avec le fluide a été anodisée, ce qui permet de minimiser le gradient thermique dans le cylindre 3. Par ailleurs, comme il peut être observé sur cette figure, un spectromètre 5 est disposé sur un trajet optique qui n'est pas celui d'un rayon spéculaire qui serait généré par la source lumineuse 2 et qui se réfléchirait sur la face colorée 4 du cylindre 3. Des cristaux solides d'hydrates de gaz 10 sont représentés schématiquement par des disques blancs sur la face colorée 3' du cylindre 3. Ces cristaux génèrent une réflexion diffuse 21 dont l'intensité lumineuse en fonction de la longueur d'onde est mesurée par le spectromètre 5.

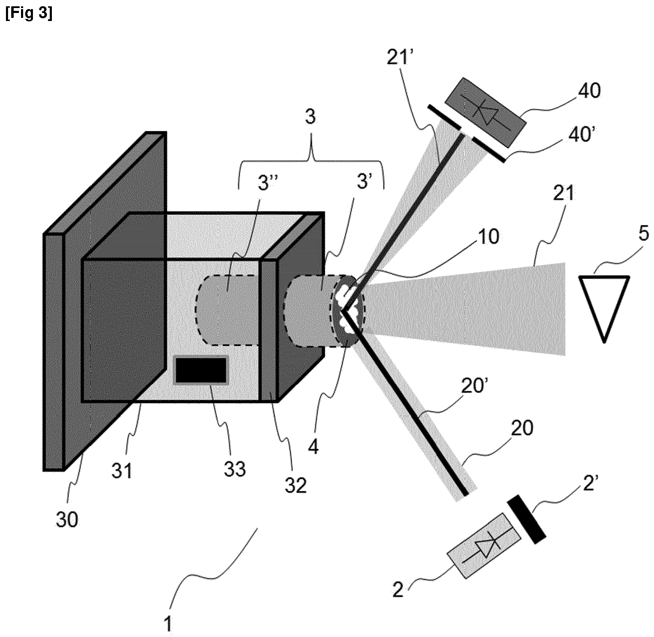

La figure 3 présente un mode de réalisation non limitatif du dispositif selon l'invention. Ce mode de réalisation comprend les éléments décrits pour la figure 2 ci-dessus, et comprend en outre une source lumineuse monochromatique 2' (par exemple un laser), disposée à proximité de la source polychromatique 2, et un photodétecteur 40, 40' sensible à la gamme de longueurs d'onde associée à la couleur prédéfinie de la surface colorée 4 du corps 3, disposé de manière à détecter un rayonnement 21' résultant d'une émission 20' par la source lumineuse monochromatique 2' et étant réémis spéculairement par la surface colorée 4 du corps 3. Selon ce mode de réalisation, le photodétecteur 40, 40' comprend une photodiode 40 et un filtre passe-bande 40' centré sur la gamme de longueurs d'onde associée à la couleur de la surface colorée 4 du corps 3.

Le procédé pour détecter au moins la présence de cristaux d'hydrates de gaz formés à partir d'un fluide selon le deuxième aspect de l'invention peut être mis en œuvre au moyen du dispositif pour détecter au moins la présence de cristaux d'hydrates de gaz décrit selon l'un quelconque des modes de réalisation ci-dessus.

Le procédé selon l'invention comporte au moins les étapes suivantes :
a) on émet, au moyen de la source lumineuse polychromatique décrite ci-dessus, un rayonnement au moins dans le domaine spectral du visible à travers ledit fluide ;
b) on mesure une intensité lumineuse en fonction de la longueur d'onde, au moyen des moyens pour mesurer une intensité lumineuse en fonction de la longueur d'onde décrits ci-dessus, d'un rayonnement réémis de manière non spéculaire par ladite surface dudit corps ayant une couleur prédéfinie lorsque ladite surface dudit corps ayant une couleur prédéfinie est éclairée par ladite source lumineuse polychromatique ;
c) on détermine que des cristaux d'hydrates sont présents sur la surface de la portion du corps si au moins ladite intensité lumineuse mesurée pour au moins une longueur d'onde distincte de ladite gamme de longueurs d'onde associée à ladite couleur prédéfinie de ladite surface de ladite portion dudit corps est supérieure à un seuil prédéfini.

Avantageusement, le seuil prédéfini est égal au seuil de détection des moyens pour mesurer une intensité lumineuse en fonction de la longueur d'onde. Autrement dit, on peut conclure à la présence de cristaux d'hydrates de gaz dès qu'une intensité lumineuse non nulle est mesurée pour au moins une longueur d'onde distincte de la gamme de longueurs d'onde associée à la couleur prédéfinie de ladite surface par l'appareil de mesure utilisé comme moyens pour mesurer une intensité lumineuse en fonction de la longueur d'onde.

Avantageusement, on peut déclencher une alerte lorsque l'intensité lumineuse mesurée en fonction de la longueur d'onde pour au moins une longueur d'onde distincte de la gamme de longueurs d'onde associée à la couleur prédéfinie de la surface de la portion du corps est supérieure à un seuil prédéfini. Selon une mise en œuvre de l'invention, on peut déclencher une alerte sous la forme d'une une indication visuelle ou sonore, ou sous la forme d'un message électronique envoyé sur un smartphone et/ou sur un ordinateur.

Selon une mise en œuvre du procédé selon l'invention, on peut répéter les étapes a) à c) pour une pluralité de températures décroissantes de la surface colorée de la portion du corps, la température de la surface colorée du corps étant abaissée au moyen des moyens de sévèrisation thermique du dispositif selon la deuxième variante principale décrits ci-dessus. La température de la surface colorée à laquelle on détecte la présence de cristaux d'hydrates indique la température de formation de cristaux d'hydrates pour le fluide d'intérêt. Il s'agit d'une information précieuse pour un exploitant d'un système industriel susceptible de générer des hydrates de gaz, car cela contribue à anticiper la formation de ces cristaux d'hydrates.

Le procédé selon l'invention peut en outre permettre de détecter la présence d'une phase liquide en mettant en œuvre en outre les étapes suivantes :
i) on émet un rayonnement à travers le fluide au moyen de la source lumineuse monochromatique ;
ii) on mesure en outre, au moyen des moyens pour mesurer une intensité lumineuse en fonction de la longueur d'onde comprenant un photodétecteur sensible à la gamme de longueurs d'onde associée à la couleur de la surface colorée du corps, une intensité lumineuse en fonction de la longueur d'onde d'un rayonnement réémis de manière spéculaire par la surface colorée, lorsque la surface colorée est éclairée par la source monochromatique ;
iii) on détermine qu'une phase liquide est présente sur la surface réfléchissante :
   - si l'intensité lumineuse en fonction de la longueur d'onde du rayonnement réémis de manière spéculaire par la surface colorée, lorsque la surface colorée est éclairée par la source lumineuse monochromatique, est inférieure à un seuil prédéfini (par exemple égal à une baisse de 10% par rapport à une intensité lumineuse de référence, mesurée préalablement par le photodétecteur en l'absence de toute condensation sur la surface colorée du corps) et
   - si l'intensité lumineuse en fonction de la longueur du rayonnement réémis de manière non spéculaire par la surface colorée, lorsque la surface colorée est éclairée par la source lumineuse polychromatique, est inférieure au seuil prédéfini à l'étape c) décrite ci-dessus pour au moins une longueur d'onde distincte de la gamme de longueurs d'onde associée à la couleur prédéfinie de la surface colorée.

De cette manière, le procédé selon l'invention permet de distinguer de manière fiable la présence d'une phase liquide de la présence de cristaux d'hydrates de gaz.

En particulier dans un objectif de surveillance d'un système industriel, le dispositif selon l'invention peut être avantageusement installé dans le flux de fluide à surveiller ou bien alternativement dans une canalisation en dérivation du flux principal.

En particulier, la mise en œuvre d'un tel dispositif ou d'un tel procédé dans un objectif de surveillance d'un système industriel permet de connaître, en temps réel, l'écart à l'équilibre des hydrates et/ou semi-clathrates susceptibles de se former, puisque les mesures sont effectuées in situ, contrairement à des mesures en laboratoire qui nécessitent la reconstitution du mélange gazeux à un instant différent. Le dispositif et le procédé selon l'invention peut être avantageusement mis à profit pour évaluer et/ou "contrôler" en temps réel l'effet d'une injection d'additifs thermodynamiques, ou cinétiques ou de leur combinaison, dans le procédé industriel. Le premier type d'additif (thermodynamique) déplace les conditions d'équilibre, le second (cinétique) ralentit la cinétique de formation, et retarde donc l'apparition des cristaux.

### Exemples

Les caractéristiques et avantages du procédé selon l'invention apparaîtront plus clairement à la lecture de l'exemple d'application ci-après.

Pour cet exemple d'application, on met en œuvre le procédé selon la première variante principale du dispositif selon l'invention, par exemple décrite en figure 3. Le fluide d'intérêt comprend du méthane ainsi que de l'eau sous forme liquide dans une proportion conduisant à générer une phase liquide avant la formation de cristaux hydrates de gaz.

Plus précisément, pour cet exemple d'application, le corps est un cylindre métallique présentant une surface réfléchissante rouge (anodisation rouge), et on utilise une LED à 4000°K comme source lumineuse polychromatique ainsi qu'un laser rouge comme source lumineuse monochromatique. Par ailleurs, on utilise un spectromètre pour mesurer une intensité lumineuse résultant d'une réflexion diffuse, et une photodiode comportant un filtre passe-bande centré sur la longueur d'onde 645 nm (plus précisément dont les bornes sont 620 et 670 nm) pour mesurer une intensité lumineuse résultant d'une réflexion spéculaire sur la surface colorée du cylindre métallique.

Le spectromètre, avant toute sévérisation thermique (et donc en l'absence de cristaux d'hydrates de gaz), reçoit une partie de la lumière de la LED de 4000°K largement augmentée de la composante rouge correspondant à la réémission par la surface réfléchissante rouge du cylindre métallique, indiquant que le capteur est fonctionnel. Puis on abaisse la température de la face rouge du cylindre métallique graduellement, au moyen des moyens de sévèrisation thermique.

Lorsque l'eau du fluide d'intérêt condense sur la face réfléchissante rouge du cylindre métallique, le spectre qu'enregistre le spectromètre n'est pas ou peu affecté, du fait de la transparence des gouttes d'eau. C'est donc principalement de la lumière rouge qui est reçue par le spectromètre. En revanche, le photodétecteur disposé sur un trajet optique spéculaire voit son niveau d'intensité lumineuse baisser du fait que la réflexion diffuse, déviation produite par les grosses gouttes d'eau principalement aux petits angles, ne participe plus à l'intensité reçue sur le photodétecteur.

Lorsqu'on poursuit la baisse de la température de la face colorée du cylindre métallique, des cristaux d'hydrates se forment en prenant la forme d'une multitude de petits défauts cristallins. Le spectre qu'enregistre le spectromètre est très diffèrent, car le phénomène de diffusion multiple concerne toutes les composantes spectrales de la source LED blanche de 4000°K. C'est donc principalement de la lumière blanche qui est reçue par le spectromètre puisqu'on n'observe plus d'intensité dans le domaine de longueurs d'onde au-delà de 600 nm. La composante rouge correspondant au dépôt réfléchissant sur la surface colorée est fortement atténuée. Le photodétecteur quant à lui reçoit moins, voire plus du tout, de lumière réfléchie spéculairement en provenance de la face colorée du cylindre. Dans ce dernier cas, la réflexion spéculaire a intégralement disparue. On peut donc conclure à la présence d'une phase condensée (solide ou liquide) formée sur la surface colorée du corps.

Un exemple de spectre (intensité lumineuse I en fonction de la longueur d'onde L) réel mesuré par le spectromètre avant formation de cristaux d'hydrates (REF) et après formation des cristaux d'hydrates (HC) est présenté en figure 4. On peut observer le signal du réflecteur rouge situé dans la gamme de longueurs d'onde (620 - 670 nm) a presque complètement disparu lorsque les cristaux sont apparus, pour laisser place à un spectre complémentaire dans la gamme (420 - 600 nm). Ceci est particulièrement clair lorsque l'on observe la courbe DIFF correspondant à la différence entre les deux courbes HC et REF. Ces valeurs d'intensité lumineuse non nulles pour des gammes de longueurs d'onde excluant la longueur d'onde rouge permettent de conclure de manière certaine que la phase condensée (solide ou liquide) sur la surface colorée du cylindre correspond à des cristaux d'hydrates de gaz.

Ainsi, la présente invention permet de détecter de manière fiable la formation de cristaux d'hydrates sur une surface mise en contact avec un fluide susceptible de générer des cristaux d'hydrates, sans confusion possible avec une phase liquide.

## Revendications

1. Dispositif (1) pour distinguer la présence d'une phase liquide de la présence de cristaux (10) d'hydrates de gaz formés à partir d'un fluide susceptible de former des cristaux (10) d'hydrates de gaz, ledit dispositif comprenant:
A. Une première source lumineuse polychromatique (2) susceptible d'émettre un rayonnement (20) au moins dans le domaine spectral du visible ;
B. un corps (3, 3', 3") dont au moins une portion (3') est en contact avec ledit fluide, ladite portion (3') dudit corps (3, 3', 3") comprenant une surface réfléchissante (4) ayant une couleur prédéfinie, ladite couleur prédéfinie étant associée à une gamme de longueurs d'onde dans le domaine spectral du visible ;
C. des premiers moyens pour mesurer une intensité lumineuse (5) en fonction de la longueur d'onde disposés de manière à détecter un rayonnement réémis de manière non spéculaire (21) par ladite surface réfléchissante (4) de ladite portion (3') dudit corps (3, 3', 3") ayant une couleur prédéfinie lorsque ladite surface réfléchissante (4) de ladite portion (3') dudit corps (3, 3', 3") ayant une couleur prédéfinie est éclairée par ladite source lumineuse polychromatique (2)
D. une deuxième source lumineuse monochromatique (2') émettant dans ladite gamme de longueurs d'onde associée à ladite couleur prédéfinie de ladite surface réfléchissante (4) de ladite portion (3') dudit corps (3, 3', 3"), et
E. des deuxièmes moyens pour mesurer une intensité lumineuse en fonction de la longueur d'onde (40, 40'), comprenant un photodétecteur (40, 40') sensible à ladite gamme de longueurs d'onde associée à ladite couleur prédéfinie de ladite surface réfléchissante (4) de ladite portion (3') dudit corps (3, 3', 3") et disposés de manière à détecter un rayonnement (20') résultant d'une émission par ladite source lumineuse monochromatique (2') et s'étant réfléchi spéculairement (21') sur ladite surface réfléchissante (4) de ladite portion (3') dudit corps (3, 3', 3") ;
F. des moyens pour détecter au moins ladite présence de cristaux (10) d'hydrates à partir de ladite intensité lumineuse mesurée en fonction de la longueur d'onde par lesdits premiers moyens pour mesurer une intensité lumineuse en fonction de la longueur d'onde (5), et d'au moins un premier seuil prédéfini, lesdits moyens pour détecter au moins ladite présence de cristaux (10) d'hydrates permettant en outre de détecter la présence d'une phase liquide à partir en outre de l'analyse de ladite intensité lumineuse mesurée en fonction de la longueur d'onde par lesdits deuxièmes moyens pour mesurer une intensité lumineuse en fonction de la longueur d'onde (40, 40').

2. Dispositif selon la revendication 1, dans lequel ladite première source lumineuse polychromatique (2) est une source LED blanche.

3. Dispositif selon l'une des revendications précédentes, dans lequel ladite couleur prédéfinie de ladite surface réfléchissante (4) de ladite portion (3') dudit corps (3, 3', 3") est le rouge.

4. Dispositif selon l'une des revendications précédentes, dans lequel lesdits premiers moyens pour mesurer une intensité lumineuse (5) en fonction de la longueur d'onde comprennent un spectromètre.

5. Dispositif selon l'une des revendications 1 à 3, dans lequel lesdits premiers moyens pour mesurer une intensité lumineuse (5) en fonction de la longueur d'onde comprennent un photodétecteur sensible aux longueurs d'onde du domaine du visible à l'exclusion de ladite gamme de longueurs d'onde associée à ladite couleur prédéfinie de ladite surface réfléchissante (4) de ladite portion (3') dudit corps (3, 3', 3").

6. Dispositif selon l'une des revendications précédentes, dans lequel ladite deuxième source lumineuse monochromatique (2') est un laser.

7. Dispositif selon l'une des revendications précédentes, dans lequel ledit corps (3, 3', 3") est un cylindre métallique dont l'une des extrémités est anodisée, ladite extrémité anodisée correspondant à ladite surface réfléchissante (4) de ladite portion (3') dudit corps (3, 3', 3") ayant une couleur prédéfinie.

8. Dispositif selon l'une des revendications précédentes, dans lequel ledit dispositif (1) comprend en outre des moyens de réglage de la température (33) d'au moins ladite surface réfléchissante (4) de ladite portion (3') dudit corps (3, 3', 3").

9. Procédé pour détecter au moins la présence de cristaux (10) d'hydrates de gaz formés à partir d'un fluide susceptible de former des cristaux (10) d'hydrates de gaz, ledit procédé étant mis en œuvre au moyen du dispositif (1) pour distinguer la présence d'une phase liquide de la présence de cristaux (10) d'hydrates de gaz formés par ledit fluide selon l'une des revendications précédentes, ledit procédé comprenant au moins les étapes suivantes :
I. on émet, au moyen de ladite première source lumineuse polychromatique (2), un rayonnement (20) au moins dans le domaine spectral du visible à travers ledit fluide ;
II. on mesure au moyen desdits premiers moyens pour mesurer une intensité lumineuse (5) en fonction de la longueur d'onde, une intensité lumineuse en fonction de la longueur d'onde d'un rayonnement réémis de manière non spéculaire (21) par ladite surface réfléchissante (4) de ladite portion (3') dudit corps (3, 3', 3") ayant une couleur prédéfinie lorsque ladite surface réfléchissante (4) de ladite portion (3') dudit corps (3, 3', 3") ayant une couleur prédéfinie est éclairée par ladite première source lumineuse polychromatique (2) ;
III. on détermine que des cristaux (10) d'hydrates sont présents sur ladite surface réfléchissante (4) de ladite portion (3') dudit corps (3, 3', 3") au moins si ladite intensité lumineuse en fonction de la longueur d'onde mesurée est supérieure audit premier seuil prédéfini pour au moins une longueur d'onde en dehors de ladite gamme de longueurs d'onde associée à ladite couleur prédéfinie de ladite surface réfléchissante (4) de ladite portion (3') dudit corps (3, 3', 3").

10. Procédé selon la revendication 9, dans lequel ledit premier seuil prédéfini est au moins égal au seuil de détection desdits premiers moyens pour mesurer une intensité lumineuse (5) en fonction de la longueur d'onde.

11. Procédé selon l'une des revendications 9 à 10, ledit procédé étant mis en œuvre au moyen du dispositif (1) pour distinguer la présence d'une phase liquide de la présence de cristaux (10) d'hydrates de gaz formés par ledit fluide selon la revendication 8, dans lequel, on répète au moins les étapes I) à III) pour une pluralité de températures décroissantes de ladite surface réfléchissante (4) de ladite portion (3') dudit corps (3, 3', 3"), ladite température de ladite surface réfléchissante (4) de ladite portion (3') dudit corps (3, 3', 3") étant abaissée au moyen desdits moyens de réglage de la température d'au moins ladite surface réfléchissante (4) de ladite portion (3') dudit corps (3, 3', 3"), et on détermine en outre une température de formation desdits cristaux (10) d'hydrates de gaz.

## Patentansprüche

1. Vorrichtung (1) zur Unterscheidung des Vorhandenseins einer flüssigen Phase vom Vorhandensein von Gashydratkristallen (10), die von einem zur Bildung von Gashydratkristallen (10) fähigen Fluid gebildet werden, wobei die Vorrichtung Folgendes umfasst:
A. eine polychromatische erste Lichtquelle (2), die eine Strahlung (20) zumindest im Spektralbereich des sichtbaren Lichts ausstrahlen kann;
B. einen Körper (3, 3', 3"), wobei sich mindestens ein Abschnitt (3') in Kontakt mit dem Fluid befindet, wobei der Abschnitt (3') des Körpers (3, 3', 3") eine reflektierende Fläche (4) mit einer vorgegebenen Farbe umfasst, wobei die vorgegebene Farbe einem Wellenlängenbereich im Spektralbereich des sichtbaren Lichts zugeordnet ist;
C. erste Mittel (5) zur Messung einer Lichtstärke in Abhängigkeit von der Wellenlänge, die so angeordnet sind, dass eine von der reflektierenden Fläche (4) des Abschnitts (3') des Körpers (3, 3', 3") mit einer vorgegebenen Farbe nichtspiegelnd reemittierte Strahlung (21) detektiert wird, wenn die reflektierende Fläche (4) des Abschnitts (3') des Körpers (3, 3', 3") mit einer vorgegebenen Farbe von der polychromatischen Lichtquelle (2) bestrahlt wird;
D. eine monochromatische zweite Lichtquelle (2'), die in dem Wellenlängenbereich emittiert, welcher der vorgegebenen Farbe der reflektierenden Fläche (4) des Abschnitts (3') des Körpers (3, 3', 3") zugeordnet ist, und
E. zweite Mittel (40, 40') zur Messung einer Lichtstärke in Abhängigkeit von der Wellenlänge, die einen Photodetektor (40, 40') umfassen, der für den Wellenlängenbereich empfindlich ist, welcher der vorgegebenen Farbe der reflektierenden Fläche (4) des Abschnitts (3') des Körpers (3, 3', 3") zugeordnet ist, und so angeordnet sind, dass sie eine Strahlung (20') detektieren, die aus einer Emission durch die monochromatische zweite Lichtquelle (2') resultiert und die von der reflektierenden Fläche (4) des Abschnitts (3') des Körpers (3, 3', 3") spiegelnd reflektiert (21') wird;
F. Mittel zum Detektieren zumindest des Vorhandenseins von Hydratkristallen (10) aus der Lichtstärke, die von den ersten Mitteln (5) zur Messung einer Lichtstärke in Abhängigkeit von der Wellenlänge in Abhängigkeit von der Wellenlänge gemessen wird, und mindestens einen vorgegebenen ersten Grenzwert, wobei die Mittel zum Detektieren zumindest des Vorhandenseins von Hydratkristallen (10) außerdem den Nachweis des Vorhandenseins einer flüssigen Phase aus außerdem der Analyse der Lichtstärke, die von den zweiten Mitteln (40, 40') zur Messung einer Lichtstärke in Abhängigkeit von der Wellenlänge gemessen wird, ermöglichen.

2. Vorrichtung nach Anspruch 1, wobei es sich bei der polychromatischen ersten Lichtquelle (2) um eine weiße LED-Quelle handelt.

3. Vorrichtung nach einem der vorhergehenden Ansprüche, wobei es sich bei der vorgegebenen Farbe der reflektierenden Fläche (4) des Abschnitts (3') des Körpers (3, 3', 3") um Rot handelt.

4. Vorrichtung nach einem der vorhergehenden Ansprüche, wobei die ersten Mittel (5) zur Messung einer Lichtstärke in Abhängigkeit von der Wellenlänge ein Spektrometer umfassen.

5. Vorrichtung nach einem der Ansprüche 1 bis 3, wobei die ersten Mittel (5) zur Messung einer Lichtstärke in Abhängigkeit von der Wellenlänge einen Photodetektor umfassen, der für Wellenlängen im Bereich des sichtbaren Lichts mit Ausnahme des Wellenlängenbereichs empfindlich ist, welcher der vorgegebenen Farbe der reflektierenden Fläche (4) des Abschnitts (3') des Körpers (3, 3', 3") zugeordnet ist.

6. Vorrichtung nach einem der vorhergehenden Ansprüche, wobei es sich bei der monochromatischen zweiten Lichtquelle (2') um einen Laser handelt.

7. Vorrichtung nach einem der vorhergehenden Ansprüche, wobei es sich bei dem Körper (3, 3', 3") um einen Metallzylinder handelt, dessen eines Ende eloxiert ist, wobei das eloxierte Ende der reflektierenden Fläche (4) des Abschnitts (3') des Körpers (3, 3', 3") mit einer vorgegebenen Farbe entspricht.

8. Vorrichtung nach einem der vorhergehenden Ansprüche, wobei die Vorrichtung (1) außerdem Mittel zur Regelung der Temperatur (33) der mindestens einen reflektierenden Fläche (4) des Abschnitts (3') des Körpers (3, 3', 3") umfasst.

9. Verfahren zur Detektion zumindest des Vorhandenseins von Gashydratkristallen (10), die von einem zur Bildung von Gashydratkristallen (10) fähigen Fluid gebildet werden, wobei das Verfahren mittels der Vorrichtung (1) zur Unterscheidung des Vorhandenseins einer flüssigen Phase vom Vorhandensein von vom Fluid gebildeten Gashydratkristallen (10) nach einem der vorhergehenden Ansprüche durchgeführt wird, wobei das Verfahren zumindest die folgenden Schritte umfasst:
I. das Emittieren einer Strahlung (20) zumindest im Spektralbereich des sichtbaren Lichts mittels der polychromatischen ersten Lichtquelle (2) durch das Fluid;
II. mittels der ersten Mittel (5) zur Messung einer Lichtstärke in Abhängigkeit von der Wellenlänge das Messen einer Lichtstärke in Abhängigkeit von der Wellenlänge einer von der reflektierenden Fläche (4) des Abschnitts (3') des Körpers (3, 3', 3") mit einer vorgegebenen Farbe nichtspiegelnd reemittierten Strahlung (21), wenn die reflektierende Fläche (4) des Abschnitts (3') des Körpers (3, 3', 3") mit einer vorgegebenen Farbe von der polychromatischen ersten Lichtquelle (2) bestrahlt wird;
III. das Bestimmen, das Hydratkristalle (10) auf der reflektierenden Fläche (4) des Abschnitts (3') des Körpers (3, 3', 3") zumindest vorhanden sind, wenn die in Abhängigkeit von der Wellenlänge gemessene Lichtstärke für mindestens eine Wellenlänge außerhalb des Wellenlängenbereichs, welcher der vorgegebenen Farbe der reflektierenden Fläche (4) des Abschnitts (3') des Körpers (3, 3', 3") zugeordnet ist, größer als der vorgegebene erste Grenzwert ist.

10. Verfahren nach Anspruch 9, wobei der vorgegebene erste Grenzwert zumindest gleich der Nachweisgrenze der ersten Mittel (5) zur Messung einer Lichtstärke in Abhängigkeit von der Wellenlänge ist.

11. Verfahren nach einem der Ansprüche 9 bis 10, wobei das Verfahren mittels einer Vorrichtung (1) zur Unterscheidung des Vorhandenseins einer flüssigen Phase vom Vorhandensein von vom Fluid gebildeten Gashydratkristallen (10) nach Anspruch 8 durchgeführt wird, wobei zumindest die Schritte I) bis III) für mehrere abnehmende Temperaturen der reflektierenden Fläche (4) des Abschnitts (3') des Körpers (3, 3', 3") wiederholt werden, wobei die Temperatur der reflektierenden Fläche (4) des Abschnitts (3') des Körpers (3, 3', 3") mittels der Mittel zur Regelung der Temperatur der mindestens einen reflektierenden Fläche (4) des Abschnitts (3') des Körpers (3, 3', 3") erniedrigt wird und außerdem eine Temperatur der Bildung der Gashydratkristalle (10) bestimmt wird.

## Claims

1. Device (1) for distinguishing the presence of a liquid phase from the presence of gas hydrate crystals (10) formed from a fluid susceptible to forming gas hydrate crystals (10), said device comprising:
A. a polychromatic first light source (2) capable of emitting radiation (20) at least in the visible domain of the spectrum;
B. a body (3, 3', 3") at least a portion (3') of which is in contact with said fluid, said portion (3') of said body (3, 3', 3") comprising a reflective surface (4) having a predefined colour, said predefined colour being associated with a range of wavelengths in the visible domain of the spectrum;
C. first means (5) for measuring a light intensity as a function of wavelength and arranged so as to detect radiation re-emitted non-specularly (21) by said reflective surface (4) of said portion (3') of said body (3, 3', 3") having a predefined colour when said reflective surface (4) of said portion (3') of said body (3, 3', 3") having a predefined colour is illuminated by said polychromatic light source (2);
D. a monochromatic second light source (2') emitting in said range of wavelengths which is associated with said predefined colour of said reflective surface (4) of said portion (3') of said body (3, 3', 3"), and
E. second means (40, 40') for measuring a light intensity as a function of wavelength and comprising a photodetector (40, 40') sensitive to said range of wavelengths associated with said predefined colour of said reflective surface (4) of said portion (3') of said body (3, 3', 3") and arranged so as to detect radiation (20') resulting from emission by said monochromatic light source (2') and having been specularly reflected (21') off said reflective surface (4) of said portion (3') of said body (3, 3', 3");
F. means for detecting at least said presence of hydrate crystals (10) from said light intensity measured as a function of wavelength by said first means (5) for measuring a light intensity as a function of wavelength, and at least a first predefined threshold, said means for detecting at least said presence of hydrate crystals (10) further making it possible to detect the presence of a liquid phase by also analysing said light intensity measured as a function of wavelength by said second means (40, 40') for measuring a light intensity as a function of wavelength.

2. Device according to Claim 1, wherein said polychromatic first light source (2) is a white LED source.

3. Device according to one of the preceding claims, wherein said predefined colour of said reflective surface (4) of said portion (3') of said body (3, 3', 3") is red.

4. Device according to one of the preceding claims, wherein said first means (5) for measuring a light intensity as a function of wavelength comprises a spectrometer.

5. Device according to one of Claims 1 to 3, wherein said first means (5) for measuring a light intensity as a function of wavelength comprise a photodetector sensitive to wavelengths in the visible domain excluding said range of wavelengths associated with said predefined colour of said reflective surface (4) of said portion (3') of said body (3, 3', 3").

6. Device according to one of the preceding claims, wherein said monochromatic second light source (2') is a laser.

7. Device according to one of the preceding claims, wherein said body (3, 3', 3") is a metal cylinder having one end anodized, said anodized end corresponding to said reflective surface (4) of said portion (3') of said body (3, 3', 3") having a predefined colour.

8. Device according to one of the preceding claims, wherein said device (1) further comprises means (33) for regulating the temperature of at least said reflective surface (4) of said portion (3') of said body (3, 3', 3") .

9. Method for detecting at least the presence of gas hydrate crystals (10) formed from a fluid susceptible to forming gas hydrate crystals (10), said method being implemented by means of the device (1) for distinguishing the presence of a liquid phase from the presence of gas hydrate crystals (10) formed by said fluid according to one of the preceding claims, said method comprising at least the following steps:
I. said polychromatic first light source (2) is used to emit, through said fluid, radiation (20) at least in the visible domain of the spectrum;
II. said first means (5) for measuring a light intensity as a function of wavelength are used to measure a light intensity as a function of wavelength of a radiation reemitted non-specularly (21) by said reflective surface (4) of said portion (3') of said body (3, 3', 3") having a predefined colour when said reflective surface (4) of said portion (3') of said body (3, 3', 3") having a predefined colour is illuminated by said polychromatic first light source (2);
III. hydrate crystals (10) are determined to be present on said reflective surface (4) of said portion (3') of said body (3, 3', 3") at least if said measured light intensity as a function of wavelength is above said first predefined threshold for at least one wavelength outside of said range of wavelengths associated with said predefined colour of said reflective surface (4) of said portion (3') of said body (3, 3', 3").

10. Method according to Claim 9, wherein said first predefined threshold is at least equal to the detection threshold of said first means (5) for measuring a light intensity as a function of wavelength.

11. Method according to one of Claims 9 to 10, said method being implemented by means of the device (1) for distinguishing the presence of a liquid phase from the presence of gas hydrate crystals (10) formed by said fluid according to Claim 8, wherein at least steps I) to III) are repeated for a plurality of decreasing temperatures of said reflective surface (4) of said portion (3') of said body (3, 3', 3"), said temperature of said reflective surface (4) of said portion (3') of said body (3, 3', 3") being lowered by means of said means for regulating the temperature of at least said reflective surface (4) of said portion (3') of said body (3, 3', 3"), and a temperature of formation of said gas hydrate crystals (10) is further determined.
